# EUROPÄISCHE PATENTSCHRIFT

(11) **EP 0 814 983 B1**
(45) Veröffentlichungstag und Bekanntmachung des Hinweises auf die Patenterteilung: **16.12.1998**
(21) Anmeldenummer: 96903909.8
(22) Anmeldetag: 28.02.1996
(51) Int. Cl.: B60T 8/00

(54) **BREMSSYSTEM FÜR EIN KRAFTFAHRZEUG**
BRAKING SYSTEM FOR A MOTOR VEHICLE
SYSTEME DE FREINAGE POUR VEHICULE AUTOMOBILE

(30) Priorität: 27.03.1995 DE 19511162
(43) Veröffentlichungstag der Anmeldung: 07.01.1998
(73) Patentinhaber: ROBERT BOSCH GMBH, 70442 Stuttgart (DE)
(72) Erfinder: GUTOEHRLEIN, Bernd, D-71640 Ludwigsburg (DE); MEIER, Thomas, F-77123 Le Vaudové (FR)
(86) Internationale Anmeldenummer: DE9600330
(87) Internationale Veröffentlichungsnummer: WO9630242

(56) Entgegenhaltungen:
- DE-C- 3 941 409
- FR-A- 2 143 293
- GB-A- 2 135 413
- GB-A- 2 158 533
- US-A- 4 656 588

## Beschreibung

### Stand der Technik

Die Erfindung betrifft ein Bremssystem für ein Kraftfahrzeug gemäß dem Oberbegriff des Patentanspruchs 1.

Ein derartiges Bremssystem ist aus der DE 41 12 388 A1 (US-Patent 5,281,012) bekannt. Das dort beschriebene Bremssystem weist eine elektronische Steuereinheit auf, welche wenigstens die Bremskraftverteilung zwischen einer Vorder- und einer Hinterachse während des Bremsvorgangs einstellt. Dabei soll die Bremskraftverteilung zwischen der Vorder- und Hinterachse möglichst nahe an der idealen Bremskraftverteilung mit Blick auf Abbremsung und Stabilität des Fahrzeugs liegen. Dies wird durch einen Regler erreicht, bei dem die Differenz zwischen dem langsamsten Hinterrad und dem schnellsten Vorderrad mit einem vorgegebenen Differenzwert verglichen wird und der Bremsdruck ist den Hinterachsbremsen derart eingestellt wird, daß der vorgegebene Wert zumindest nicht überschritten wird. Der elektronische Regler begrenzt dabei den Druck in der Hinterachse und vermeidet ein Blockieren der Hinterachsräder vor den Vorderachsrädern. Beim bekannten Regler wird eine korrekte Erfassung der Raddrehzahlen an den Rädern des Kraftfahrzeugs vorausgesetzt. Maßnahmen für den Fehlerfall werden nicht vorgestellt.

Es ist daher Aufgabe der Erfindung, Maßnahmen anzugeben, welche die Aufrechterhaltung der Funktionsfähigkeit des Bremskraftverteilungsregler gewährleisten und ein Blockieren der Hinterräder vor den Vorderrädern auch im Fehlerfall eines Drehzahlfühlers vermeiden.

Dies wird durch die kennzeichnenden Merkmale des Patentanspruchs 1 erreicht.

Zur Überprüfung der Funktionsfähigkeit von Drehzahlsensoren bzw. zur Fehlererkennung bei Drehzahlsensoren sind eine Vielzahl von Maßnahmen bekannt (vgl. z.B. DE 34 18 235 C2).

### Vorteile der Erfindung

Durch die erfindungsgemäße Vorgehensweise werden die vorteilhaften Wirkungen eines elektronischen Bremskraftverteilungsreglers auch bei Ausfall eines Drehzahlfühlers erreicht.

Dabei ist es besonders vorteilhaft, daß die vorteilhaften Wirkungen sowohl bei Ausfall eines Drehzahlfühlers an einem Vorderrad als auch bei Ausfall eines Drehzahlfühlers an einem Hinterrad erreicht werden.

Dabei wird in vorteilhafter Weise die Funktionsfähigkeit des Bremskraftverteilungsreglers aufrechterhalten und dadurch ein Blockieren der Hinterräder vor den Vorderrädern beim Bremsvorgang vermieden. Besonders vorteilhaft ist, daß ferner die Fahrzeugstabilität bei Fahrzeugen mit überbremster Hinterachse verbessert wird.

Durch ergänzende Maßnahmen werden sowohl bei einem Ausfall eines Drehzahlfühlers an einem Vorderrad als auch bei Ausfall eines Drehzahlfühlers an einem Hinterrad die Stabilität des Fahrzeugs bei einer Kurvenbremsung verbessert.

Weitere Vorteile ergeben sich aus der nachfolgenden Beschreibung von Ausführungsbeispielen bzw. aus den abhängigen Ansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild eines Bremssytems mit elektronischer Bremskraftverteilungsregelung, bei welchem die erfindungsgmäßen Maßnahmen im Fehlerfall eingesetzt werden. In den Figuren 2 und 3 sind Flußdiagramme dargestellt, die die erfindungsgemäße Vorgehensweise bei einem Drehzahlfühlerausfall am Vorderrad und am Hinterrad als Rechenprogramm skizziert.

### Beschreibung von Ausführungsbeispielen

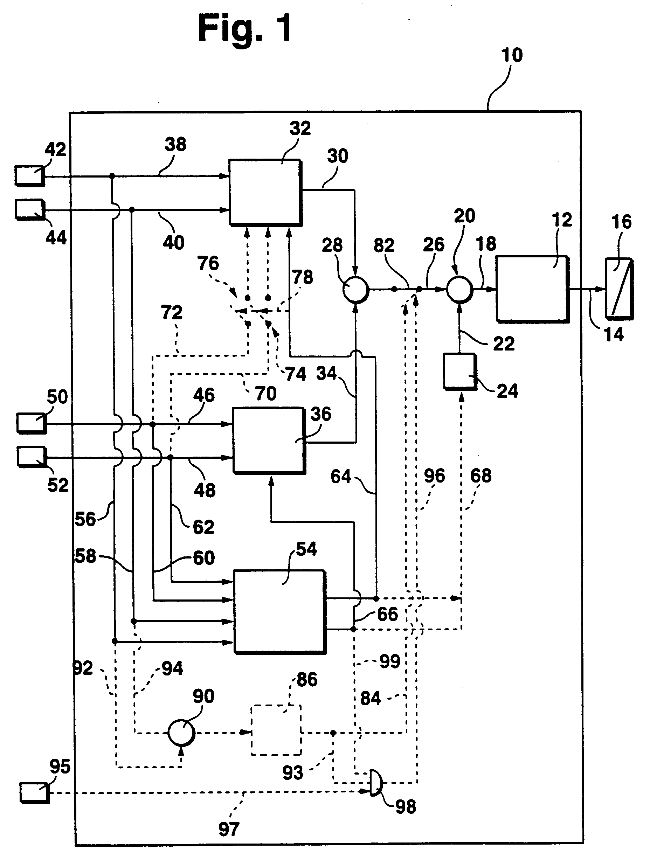

Figur 1 zeigt eine elektronische Steuereinheit 10, welche aus wenigstens einem, nicht dargestellten Mikrocomputer besteht. Die Steuereinheit 10 bzw. der Mikrocomputer umfaßt dabei in Bezug auf die Regelung der Bremskraftverteilung zwischen Vorder- und Hinterachse im wesentlichen einen entsprechenden Regler 12. Die Ausgangsleitung 14 der Steuereinheit 10 bzw. des Reglers 12 führt auf Ventile 16 zur Beeinflussung des Bremsdruckes in den Hinterradbremsen. Über eine Leitung 18 wird dem Regler 12 von einer Vergleichsstelle 20 ein Maß für die Abweichung zwischen dem Soll- und dem Istwert für die Differenz zwischen dem schnellsten Vorder- und dem langsamsten Hinterrad übermittelt. Dabei werden der Vergleichsstelle 20 über die Leitung 22 von einer Speichereinheit 24 der Sollwert und über eine Leitung 26 von einer Vergleichsstelle 28 der Istwert zugeführt. Der Vergleichsstelle 28 werden zur Bildung der Differenz zwischen dem schnellsten Vorderrad und dem langsamsten Hinterrad eine Leitung 30 von einer Maximalwertauswahlstufe 32 sowie eine Leitung 34 von einer Minimalwertauswahlstufe 36 zugeführt. Der Maximalwertauswahlstufe 32 sind im bevorzugten Ausführungsbeispiel eines zweiachsigen Fahrzeugs Eingangsleitungen 38 und 40 von Drehzahlfühlern 42 und 44, welche die Raddrehzahlen der Vorderräder erfassen, zugeführt. Der Minimalwertauswahlstufe 36 sind Leitungen 46 und 48 von den Drehzahlfühlern 50 und 52, welche die Drehzahlen der Hinterräder erfassen, zugeführt. Ferner ist eine Fehlerermittlungseinheit 54 vorgesehen, der die Leitungen 56, 58, 60 und 62 von den Leitungen 38, 40, 48 und 46 zugeführt sind. Eine erste Ausgangsleitung 64 der Fehlerermittlungseinheit führt auf die Maximalwertauswahlstufe 32, während eine zweite Ausgangsleitung 66 auf die Minimalwertauswahlstufe 36 führt.

Analog zur obigen Darstellung an einem zweiachsigen Fahrzeug wird bei einem mehrachsigen Fahrzeug vorgegangen.

In einer bevorzugten Ausführungsform führt von den Ausgangsleitungen 64 und 66 eine Leitung 68 zum Speicherelement 24. Ferner führen in einem bevorzugten Ausführungsbeispiel von der Leitung 46 eine Leitung 70 und von der Leitung 48 eine Leitung 72 über Schaltelemente 74 bzw. 76 zur Maximalwertauswahlstufe 32. Die Schaltelemente 74 und 76 werden über die Leitung 78, die von der Ausgangsleitung 64 der Fehlerermittlungseinheit 54 ausgeht, geschaltet.

Ferner ist in einem weiteren bevorzugten Ausführungsbeispiel ein Schaltelement 82 vorgesehen, welches in die Leitung 26 zwischen den Vergleichsstellen 20 und 28 eingefügt ist. Dieses Schaltelement trennt die Verbindung zwischen den Vergleichsstellen auf und verbindet die Vergleichstelle 20 mit einer Leitung 84. Diese geht von einer Schwellwertstufe 86 aus, der eine Leitung 88 von einer Vergleichsstelle 90 zugeführt wird. Der Vergleichsstelle 90 wird von der Leitung 56 eine Leitung 92 und von der Leitung 58 eine Leitung 94 zugeführt. Das Schaltelement 82 wird über die Leitung 96 geschaltet. Diese ist Ausgangsleitung eines logischen UND-Gatters 98, der eine Leitung 99 ausgehend von der Ausgangsleitung 66 der Fehlerermittlungseinheit, eine Leitung 97, die von einem Bremslichtschalter 95 ausgeht sowie eine Leitung 93, die von der Leitung 84 abzweigt, zugeführt wird.

Die dargestellten Elemente dienen zur Regelung der Bremskraftverteilung zwischen Vorder- und Hinterachse im Normalbetrieb und bei Ausfall eines Drehzahlfühlers an einem Vorder- und/oder Hinterrad. Daneben umfaßt die Steuereinheit 10 nicht dargestellte Elemente zur Antiblockierschutz-, Antriebsschlupf -, Motorschleppmomentregelung, etc.. Der hydraulische Teil der Bremsanlage, der in Figur 1 symbolisch durch das Ventil 16 dargestellt ist, entspricht im bevorzugten Ausführungsbeispiel den in dem eingangs genannten Stand der Technik der DE 41 12 388 A1 (US-Patent 5,281,012) beschriebenen. Neben der Anwendung auf diese hydraulische Bremsanlage findet die erfindungsgemäße Vorgehensweise auch vorteilhafte Anwendung in Verbindung mit anders aufgebauten hydraulischen Anlagen, pneumatischen Bremsanlagen oder Bremsanlagen mit elektromotorischer Zuspannung.

Die in Figur 1 dargestellten Maßnahmen erhöhen die Verfügbarkeit der elektronischen Bremskraftverteilungsregelung und ermöglichen den Nutzen der Vorteile dieser Regelung auch bei Ausfall eines Drehzahlfühlers an Vorder- und/oder Hinterrad. Dabei kann auf hydraulische oder pneumatische Druckminderer an der Hinterachse verzichtet werden und im Teilbremsbereich durch geänderte Bremskraftverteilung eine gleichmäßigere termische Belastung aller Radbremsen auch im Fehlerfall erreicht werden. Ein Blockieren der Hinterräder vor den Vorderrädern wird wirksam verhindert und so die Stabilität des Fahrzeugs beim Bremsvorgang auch im Fehlerfall weitgehend gewährleistet.

Im fehlerfreien Betrieb werden die Raddrehzahlen der Vorderräder, die durch die Drehzahlfühler 42 und 44 erfaßt werden, der Maximalwertauswahlstufe 32 zugeführt. Dort wird der Maximalwert der beiden Meßgrößen ermittelt, das heißt, es wird das am schnellsten laufende Vorderrad ermittelt. Gleichzeitig werden die Raddrehzahlen der Hinterräder, die von den Drehzahlfühlern 50 und 52 erfaßt werden, der Minimalwertauswahlstufe 36 zugeführt. Dort wird der Minimalwert der zugeführten Meßwerte gebildet, das heißt, es wird das am langsamsten laufende Hinterrad festgestellt. In der Vergleichsstelle 28 wird die Differenz zwischen dem Maximal- und dem Minimalwert gebildet und daraufhin in der Vergleichsstelle 20 die Regelabweichung zwischen dem in der Vergleichsstelle 28 ermittelten Istwert und einem in dem Speicherelement 24 abgelegten, vorgegebenen Sollwert für die Drehzahldifferenz errechnet. Der Regler 12, der im bevorzugten Ausführungsbeispiel gemäß dem eingangs genannten Stand der Technik ausgebildet ist, bildet in Abhängigkeit der zugeführten Regelabweichung Ausgangssignale zur Beeinflussung des Hinterachsbremsdrucks im Sinne einer Annäherung des Istwertes an den Sollwert.

In einem bevorzugten Ausführungsbeispiel wird dabei das Überschreiten des vorgegebenen Sollwertes durch den Istwert durch Begrenzung oder Reduzierung des Hinterachsbremsdrucks verhindert. In anderen vorteilhaften Ausführungsformen des Reglers wird der Istwert durch Erhöhen und Erniedrigen des Hinterachsbremsdrucks auf den Sollwert eingeregelt.

Der Fehlerermittlungseinheit werden über die entsprechenden Leitungen ebenfalls die Meßwerte für die Raddrehzahlen zugeführt. Die Fehlerermittlungseinheit wertet dabei die Raddrehzahlsignale einzeln mit Blick auf mögliche Fehlerzustände aus. Wird ein Fehler eines Vorderraddrehzahlfühlers erkannt, gibt die Fehlererkennungseinheit 54 ein entsprechendes Signal über die Leitung 64 aus. Analog gibt sie ein entsprechendes Signal im Fehlerfall eines Hinterraddrehzahlfühlers über die Leitung 66 aus.

Im Fehlerfall bleibt das Ventilrelais, über welches die Einlaß- und Auslaßventile der Radbremsen mit Spannung versorgt werden, sowie die Ansteuerung der Rückförderpumpe aktiv. Ferner wird das fehlerhafte Signal von der Bildung der geschätzten Fahrzeuggeschwindigkeit ausgeklammert, die im Normalbetrieb auf der Basis aller Raddrehzahlsignalen gebildet wird. Im Fehlerfall eines Vorderraddrehzahlfühlers steht für die Referenzbildung und für die Bildung der Regelabweichung für den Bremskraftverteilungsregler lediglich ein Vorderraddrehzahlsignal zur Verfügung. Das fehlerhafte Raddrehzahlsignal wird von der Maximalwertauswahl ebenfalls ausgeklammert, beispielsweise indem es auf einen Minimalwert gesetzt wird. Das fehlerhafte Raddrehzahlsignal hat somit keinen Einfluß mehr auf Referenzbildung und auf die Bildung der Regelabweichung für die Bremskraftverteilung. Das korrekte Vorderraddrehzahlsignal wird dann immer als schnellstes Vorderrad angenommen. Die Funktion des elektronischen Bremskraftverteilungsreglers entspricht dann im weiteren der des Normalbetriebs. Es wird auch im Fehlerfall eines Vorderradrehzahlfühlers die Differenz zwischen dem schnellsten und dem langsamsten Hinterrad gebildet und der Regelung zugrundegelegt. Besonders vorteilhaft ist, daß im Fehlerfall die Empfindlichkeit der Regelung erhöht wird. Dies bedeutet, daß im Fehlerfall eines Vorderraddrehzahlfühlers der Regler zur Bremskraftverteilung bereits bei einer kleineren Differenz als im Normalbetrieb anspricht. Dazu wird der im Speicherelement 24 gespeicherte Sollwert im Fehlerfall auf einen kleineren Wert umgeschaltet. Die je nach Lage des defekten Drehzahlfühlers auftretende unterschiedliche Stabilität bei einer Kurvenbremsung (je nachdem, ob der defekte Drehzahlfühler am kurvenäußeren oder am kurveninneren Rad liegt) sowie die möglichen unterschiedlichen Stabilitäten auf Fahrbahnen mit seitenweisen unterschiedlichen Reibwerten je nach Anordnung der Reibwerte beeinträchtigen zwar den Bremsvorgang. Die Vorteile der weiterhin vorhandenen Seitenführung sowie der nichtblockierenden Hinterräder wiegen diesen Nachteil bei weitem auf.

Eine weitere Verbesserung der Stabilität bei einem defekten Vorderraddrehzahlfühler ergibt sich durch die folgende erganzende Maßnahme. Es wird die Schlupfberechnung für den Bremskraftverteilungsregler, das heißt die Bildung der Differenz zwischen dem schnellsten Vorderrad und dem langsamsten Hinterrad modifiziert. Dazu wird im Fehlerfall die Differenz zwischen dem schnellsten aller Räder oder einer Hilfsreferenz resultierend aus dem schnellsten aller verbleibenden Räder und dem langsamsten Hinterrad gebildet. Dies ist in Figur 1 dadurch skizziert, daß im Fehlerfall der Maximalwertauswahlstufe 32 auch die Raddrehzahlen der Hinterraddrehzahlfühler 50 und 52 zugeführt werden. Diese Maßnahme verbessert die Stabilität bei einer Kurvenbremsung dann, wenn der defekte Vorderraddrehzahlfühler am kurvenäußeren Vorderrad liegt. Dann kann das kurvenäußere Hinterrad das schnellste Rad sein. Der Bremskraftverteilungsregler spricht somit dann zu einem früheren Zeitpunkt mit Druckhalten oder Druckabbau an der Hinterachse an und verbessert so die Stabilität bei der Kurvenbremsung.

Entsprechend wird die Bremskraftverteilungsregelung auch im Fehlerfall an einem Hinterraddrehzahlfühler fortgeführt. Dabei wird bei einer Bremsung zumindest das Blockieren eines der Hinterräder vermieden und somit die Stabilität des Bremsvorgangs im wesentlichen erhalten. Auch hier liegen vom defekten Drehzahlfühler keine Informationen über die Raddrehzahl vor. Es wird also im Fehlerfall eines Hinterraddrehzahlfühlers dieses Drehzahlsignal von Referenz- und Schlupfberechnung ausgeschlossen.

Eine Verbesserung der Stabilität bei einer Kurvenbremsung ergibt sich aus der folgenden vorteilhaften Maßnahme. Neben der Regelung des Hinterachsbremsdrucks auf der Basis zwischen dem schnellsten Vorderrad und dem langsamsten Hinterrad ist vorgesehen, im Fehlerfall eines Hinterraddrehzahlfühlers die Bremskraftverteilungsfunktion auch dann zu aktivieren, wenn ein Vorderrad gegenüber dem anderen Vorderrad oder gegenüber der Referenzgeschwindigkeit einen Schlupf aufweist, das heißt die Differenz zwischen den Raddrehzahlen einen vorgegebenen Wert überschreitet. Dies auch dann, wenn am verbleibenden Hinterrad kein oder kein großer Schlupf zu erkennen ist. Die Aktivierung des Bremskraftverteilungsreglers 12 erfolgt dabei bei Vorliegen eines Fehlersignals (Leitung 99), einer Bremspedalbetätigung (Bremslichtschalter 95) sowie bei Vorliegen einer Drehzahldifferenz zwischen den beiden Vorderrädern, die über dem vorgegebenen Schwellwert liegt (Leitung 93). Diese Maßnahme führt zu einer verbesserten Stabilität bei einer Kurvenbremsung, wenn der defekte Hinterraddrehzahlfühler am Kurveninneren liegt.

In der einfachsten Realisierungsform hält der Regler 12 in diesem Betriebszustand den Hinterachsbremsdruck konstant, solange die Differenz zwischen den Vorderraddrehzahlen den in der Schwellwertstufe 86 vorgegebenen Schwellwert überschritten hat. In einem anderen vorteilhaften Ausführungsbeispiel (vgl. Fig. 1) tritt die Differenz zwischen den Vorderraddrehzahlen als Istwert an die Stelle der Differenz zwischen dem schnellsten Vorderrad und dem langsamsten Hinterrad, so daß solange die Differenz zwischen den Vorderraddrehzahlen anhält, der Hinterachsbremsdruck konstant gehalten oder abgebaut wird.

Entsprechend der Maßnahme bei einem Vorderraddrehzahlfühler wird der Bremskraftverteilungsregler auch beim Fehlerfall eines Hinterraddrehzahlfühlers empfindlicher gestaltet, indem der experimentell bestimmte Differenzsollwert auf einen kleineren Wert umgeschaltet wird.

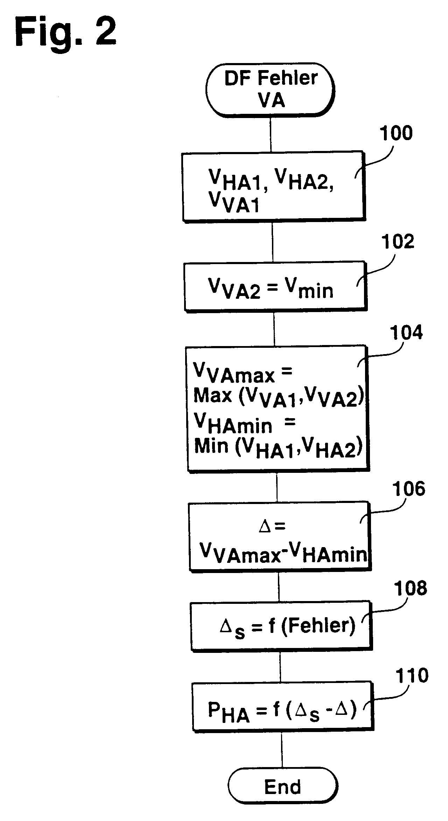

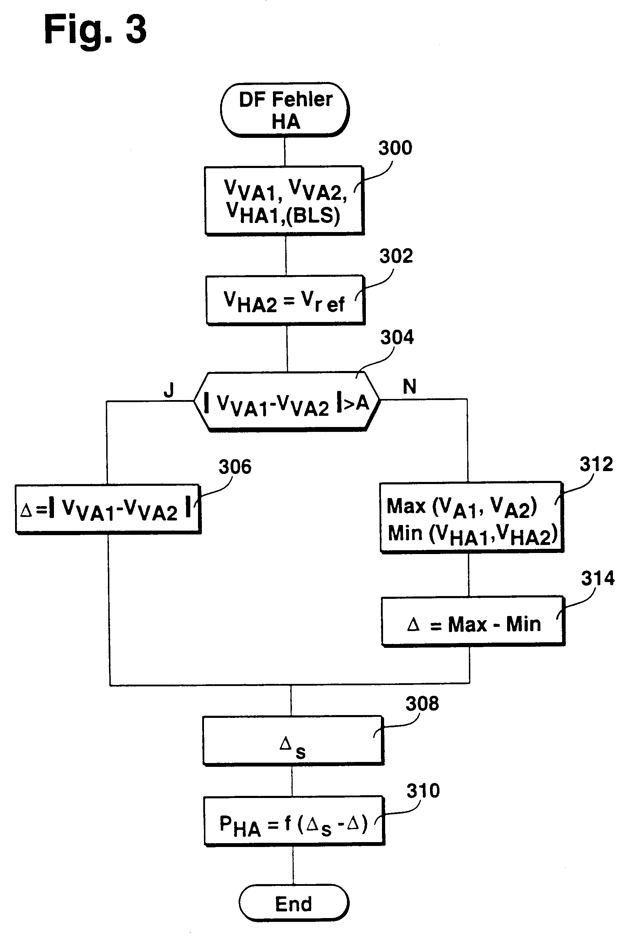

In den Figuren 2 und 3 sind die vorstehend beschriebenen Maßnahmen als Flußdiagramme skizziert, welche die Ausführung der erfindungsgemäßen Vorgehensweise als Rechnerprogramm darstellen. Dabei wird der in Figur 2 dargestellte Programmteil bei einem Drehzahlfühlerfehler an einem Vorderrad, der in Figur 3 dargestellte Programmteil bei einem Drehzahlfühlerfehler an einem Hinterrad eingeleitet.

Nach Start des in Figur 2 dargestellten Programmteils werden in einem ersten Schritt 100 die beiden Raddrehzahlen der Hinterraddrehzahlfühler Vha1 und Vha2 sowie das Drehzahlfühlersignal des funktionstüchtigen Vorderraddrehzahlfühlers (hier z.B. Vva1, Vva2 sei defekt) eingelesen. Im darauffolgenden Schritt 102 wird das Vorderraddrehzahlsignal des als defekt erkannten Drehzahlfühlers Vva2 auf einen Minimalwert Vmin gesetzt. Im darauffolgenden Schritt 104 wird auf der Basis der beiden Vorderraddrehzahlsignalen der Maximalwert Vvamax sowie auf der Basis der beiden Hinterraddrehzahlsignale der Minimalwert Vhamin bestimmt. Wie oben erwähnt, werden in einem anderen vorteilhaften Ausführungsbeispiel zur Bildung des Maximalwerts alle Raddrehzahlsignale, insbesondere die funktionstüchtigen Raddrehzahlsignale, herangezogen.

Im darauffolgenden Schritt 106 wird die Differenz Δ zwischen dem Maximal- und dem Minimalwert gebildet. Daraufhin wird im Abfrageschritt 108 in einem vorteilhaften Ausführungsbeispiel der im Fehlerfall zu verwendende Differenzensollwert Δ S ausgelesen und im darauffolgenden Schritt 110 der Hinterachsbremsdruck als Funktion der Differenz zwischen Soll- und Istdifferenzwert eingestellt. Nach Schritt 110 wird der Programmteil beendet und zu gegebener Zeit wiederholt.

Nach Start des Programmteils in Figur 3 bei Vorliegen eines Fehler an einem Hinterraddrehzahlfühler wird im ersten Schritt 300 die Vorderraddrehzahlen Vva1 und Vva2 sowie das korrekte Hinterraddrehzahlsignal (hier Vha1, Vha2 sei defekt) eingelesen. Ferner wird in einem bevorzugten Ausführungsbeispiel der Signalzustand BLS des Bremspedalschalters eingelesen. Daraufhin wird im Schritt 302 als zweites Hinterraddrehzahlsignal Vha2 das aus den korrekten Signalwerten gebildetes Referenzgeschwindigkeitssignal Vref oder auf einen daraus abgeleiteten Signalwert gesetzt. Alternativ wird das Drehzahlsignal auf ein auf andere Weise ermitteltes Fahrgeschwindigkeitssignal oder auf einen Maximalwert gesetzt. Im darauffolgenden Abfrageschritt 304 wird der Betrag der Differenz zwischen den beiden Raddrehzahlen der Vorderräder mit einem vorgegebenen Schwellwert A verglichen. Überschreitet der Betrag der Differenz diesen Schwellwert und signalisisert gleichzeitig der Bremslichtschalter eine Bremsbetätigung, wird gemäß Schritt 306 der Differenzwert Δ auf den Betrag der Differenz der Raddrehzahlen der beiden Vorderräder gesetzt. Daraufhin wird im Schritt 308 der Differenzsollwert, ggf. unter Berücksichtigung der Fehlersituation und der Tatsache, daß als Istwert der Schlupf zwischen den beiden Vorderrädern vorliegt, ausgelesen und im darauffolgenden Schritt 310 der Hinterachsbremsdruck als Funktion der Differenz zwischen Solldifferenz und Istdifferenz gesteuert. Nach Schritt 310 wird der Programmteil beendet und zu gegebener Zeit wiederholt.

Hat es sich in Schritt 304 ergeben, daß die Differenz zwischen den beiden Vorderrädern den Schwellwert A nicht überschreitet, so wird im Schritt 312 der Maximal- bzw. Minimalwert aus den Vorderraddrehzahlsignalen bzw. den Hinterraddrehzahlen gebildet. Im darauffolgenden Schritt 304 wird dann der Istwert Δ aus der Differenz zwischen Maximal- und Minimalwert berechnet, der dann gemäß Schritt 308 und 310 eingestellt wird.

Die Durchführung des Schritts 306 hat sich dabei in einem Ausführungsbeispiel als geeignet erwiesen. In anderen Ausführungsbeispiel wird der Notlauf bei einem Hiterraddrehzahlfühlerfehler nur auf der Basis der Schritte 312 und 314 durchgeführt.

Die erfindungsgemäße Vorgehensweise bezieht bei einem zweiachsigen Fahrzeug nur auf Einzelfehler an einer Achse. Treten Doppelfehler auf, das heißt fallen alle Drehzahlfühler aus, müssen andere Maßnahmen ergriffen werden.

Wurde sowohl ein Fehler an einem Vorderrad als auch an einem Hinterrad erkannt, werden die erfindungsgemäßen Maßnahmen in Kombination (ohne Schritt 306) durchgeführt.

Die erfindungsgemäße Vorgehensweise ist bei allen Bremskraftverteilungsregler, die auf der Basis der Raddrehzahlsignalen arbeiten, in vorteilhafter Weise anzuwenden.

## Patentansprüche

1. Bremssystem für ein Kraftfahrzeug,
- mit einem Regler (12) zur Regelung der Bremskraftverteilung zwischen Vorder- und Hinterachse auf der Basis der Raddrehzahlsignale nach Maßgabe eines Solldifferenzenwertes, gekennzeichnet durch
- eine Fehlerermittlungseinheit (54), die wenigstens Fehler bezüglich der Drehzahlsignale der Räder des Kraftfahrzeugs ermittelt,
- wobei bei einem Fehler in einem Drehzahlsignal eines Vorderrads und/oder eines Hinterrads der Regler (12) zur Bremskraftverteilung unter Ausklammerung des oder der fehlerbehafteten Drehzahlsignale im Rahmen eines Notlaufs weitergeführt wird, und wobei
- im Fehlerfall die Empfindlichkeit des Bremskraftverteilungsreglers durch Auswahl eines betragsmäßig kleineren Solldifferenzenwertes erhöht wird.

2. Bremssystem nach Anspruch 1, dadurch gekennzeichnet, daß zur Steuerung der Bremskraftverteilung zwischen Vorder- und Hinterachse die Differenz zwischen dem schnellsten Vorderrad und dem langsamsten Hinterrad gebildet wird und zu einem vorgegebenen Sollwert zur Einstellung des Hinterachsbremsdrucks in Bezug gesetzt wird.

3. Bremssystem nach einem der vorhergehenden Ansprüche, dadurch gekennzeichnet, daß im Fehlerfall eines Vorderraddrehzahlsignals das funktionstüchtige Drehzahlsignal als schnellstes Vorderrad angenommen wird.

4. Bremssystem nach Anspruch 1 oder 2, dadurch gekennzeichnet, daß zur Regelung bei defektem Vorderraddrehzahlfühler das schnellste aller verbliebenen Räder herangezogen wird.

5. Bremssystem nach einem der vorhergehenden Ansprüche, dadurch gekennzeichnet, daß im Fehlerfall eines Hinterraddrehzahlfühlers als Ersatzsignal für das defekte Drehzahlsignal das Fahrgeschwindigkeitsreferenzsignal oder des Fahrgeschwindigkeitssignals selbst gesetzt wird.

6. Bremssystem nach einem der vorhergehenden Ansprüche, dadurch gekennzeichnet, daß im Fehlerfall eines Hinterraddrehzahlsignals der elektronische Bremskraftverteilungsregler aktiviert wird, wenn die Differenz zwischen den Raddrehzahlen der Vorderräder während des Bremsvorgangs einen bestimmten Schwellwert überschreitet.

7. Bremssystem nach einem der vorhergehenden Ansprüche, dadurch gekennzeichnet, daß im Fehlerfall eines Hinterraddrehzahlsignals als Differenzenistwert die Differenz zwischen den Raddrehzahlen der beiden Vorderräder herangezogen wird.

## Claims

1. Braking system for a motor vehicle,
- having a regulator (12) for regulating the distribution of braking force between the front axle and rear axle on the basis of the wheel speed signals in accordance with a setpoint difference value, characterized by a fault-determining unit (54) which at least determines faults with respect to the speed signals of the wheels of the motor vehicle,
- in the event of a fault in a speed signal of a front wheel and/or of a rear wheel, the regulator (12) for distributing braking force continuing to be operated as part of an emergency running procedure with the exclusion of the fault-affected speed signal or signals, and
- in the event of a fault the sensitivity of the braking force distribution regulator being increased by selecting a setpoint difference value which is relatively small in absolute value.

2. Braking system according to Claim 1, characterized in that, in order to control the distribution of braking force between the front axle and rear axle, the difference between the fastest front wheel and the slowest rear wheel is formed and is referred to a prescribed setpoint value in order to set the rear-axle braking pressure.

3. Braking system according to one of the preceding claims, characterized in that, in the event of a fault in a front wheel speed signal, the functionally capable speed signal is assumed to be the fastest front wheel.

4. Braking system according to Claim 1 or 2, characterized in that the fastest of all the remaining wheels is used for regulating when there is a defective front-wheel speed sensor.

5. Braking system according to one of the preceding claims, characterized in that, in the event of a fault in a rear-wheel speed sensor, the travel-speed reference signal or the travel-speed signal itself is set as back-up signal for the defective speed signal,

6. Braking system according to one of the preceding claims, characterized in that, in the event of a fault in a rear-wheel speed signal, the electronic braking force distribution regulator is activated if the difference between the wheel speeds of the front wheels exceeds a specific threshold value during the braking procedure.

7. Braking system according to one of the preceding claims, characterized in that, in the event of a fault in a rear-wheel speed signal, the difference between the wheel speeds of the two front wheels is used as the actual difference value.

## Revendications

1. Système de frein pour véhicule automobile comprenant :
- un régulateur (12) pour réguler la répartition de la force de freinage entre l'essieu avant et l'essieu arrière sur la base des signaux de vitesse de rotation de roue après indication d'une valeur de différence de consigne,
caractérisé en ce que
- une unité de détection de défaut (54) qui détermine au moins un défaut relatif à des signaux de vitesse de rotation des roues du véhicule,
- en cas de défaut dans un signal de vitesse de rotation d'une roue avant et/ou d'une roue arrière, le régulateur (12) exclut pour la répartition de la force de freinage le ou les signaux de vitesse de rotation défectueux dans le cadre d'un fonctionnement de secours et,
- en cas de défaut, on augmente la sensibilité du régulateur de répartition de la force de freinage en choisissant une valeur de différence de consigne de plus petite amplitude.

2. Système de frein selon la revendication 1,
caractérisé en ce que
pour commander la répartition de la force de freinage entre l'essieu avant et l'essieu arrière, on forme la différence entre la roue avant la plus rapide et la roue arrière la plus lente et on l'utilise par rapport à une valeur de consigne prédéterminée pour régler la pression de frein de l'essieu arrière.

3. Système de frein selon l'une quelconque des revendications précédentes,
caractérisé en ce qu'
en cas de défaut d'un signal de vitesse de rotation de roue avant, on prend le signal de vitesse de rotation du capteur non défectueux comme celle de la roue avant la plus rapide.

4. Système de frein selon les revendications 1 ou 2,
caractérisé en ce que
pour réguler en cas de capteurs de vitesse de rotation de roue défectueux, on utilise celui de la roue la plus rapide parmi ce qui subsiste.

5. Système de frein selon l'une quelconque des revendications,
caractérisé en ce qu'
en cas de défaut d'un capteur de vitesse de rotation de roue arrière, on prend directement comme signal de remplacement du signal du capteur défectueux, le signal de référence de vitesse du véhicule ou le signal de vitesse du véhicule.

6. Système de frein selon l'une quelconque des revendications,
caractérisé en ce qu'
en cas de défaut d'un signal de vitesse de rotation de roue arrière, on active le régulateur de répartition électronique de la force de freinage si la différence entre les vitesses de rotation des roues avant dépasse un seuil déterminé au cours de la phase de freinage.

7. Système de frein selon l'une quelconque des revendications,
caractérisé en ce qu'
en cas de défaut d'un signal de vitesse de rotation de roue arrière, on prend comme valeur de la différence, la différence entre les vitesses de rotation des deux roues avant.
